# EUROPEAN PATENT SPECIFICATION

(11) **EP 0 599 574 B1**
(45) Date of publication and mention of the grant of the patent: **28.05.1997**
(21) Application number: 93309278.5
(22) Date of filing: 22.11.1993
(51) Int. Cl.: F16C 33/58, F16C 33/78

(54) **Rolling element bearing and sealing structure therefor**
Wälzlager mit Dichtungsvorrichtung
Palier à contact de roulement avec dispositif d'étanchéité

(30) Priority: 25.11.1992 US 981965
(43) Date of publication of application: 01.06.1994
(73) Proprietor: THE TORRINGTON COMPANY, Torrington, Connecticut 06790 (US)
(72) Inventor: McLarty, Daniel R., Burlington, Connecticut 06013 (US)
(74) Representative: Feakins, Graham Allan

(56) References cited:
- EP-A- 0 339 631
- DE-A- 3 602 051
- DE-C- 3 612 052
- DE-U- 9 005 328
- FR-A- 2 052 808
- GB-A- 1 241 605
- GB-A- 2 188 377
- US-A- 3 245 735

## Description

This invention relates to rolling element bearings having a variety of inner bearing ring configurations.

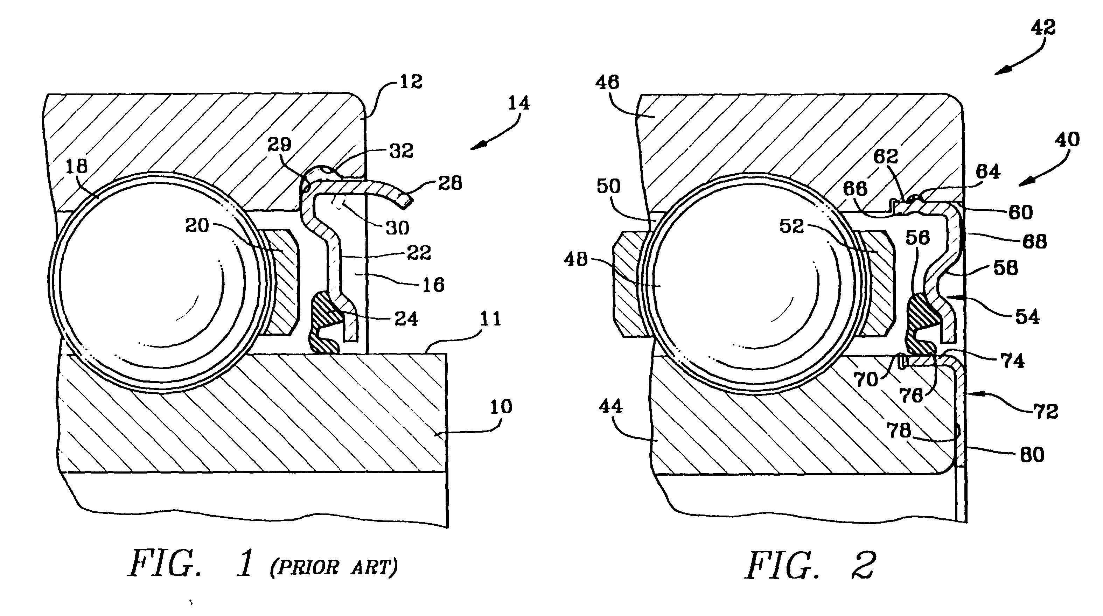

Various sealing structures have been provided in rolling element bearing assemblies to retain lubricant and to exclude debris and other contaminates. In particular applications, the inner ring of such bearing assemblies may be required to have a specific axial length different from that of other applications for the same bearing size. One well known bearing assembly configuration for such applications is illustrated in Figure 1, wherein an inner ring 10 extends axially outward as axial extension portion 11 to a length greater than that of an outer ring 12.

As illustrated in Figure 1, a sealing structure 14 closes an annulus 16 between the inner ring 10 and outer ring 12 to retain lubricant within the bearing assembly and to prevent entrance of contaminants to rolling elements 18 and bearing races of the inner ring 10 and outer ring 12. In the configuration illustrated, the rolling elements 18 are balls within the annulus 16, separated and held by retainer (or cage) 20. The sealing structure 14 comprises a metal bearing shield (or cap) 22 and a resilient seal member 24 which is deformable against a cylindrical outer portion of the inner ring 10, as shown.

The bearing shield 22 has an axially outwardly extending deformable lip 28. During assembly, the bearing shield 22, with resilient seal member 24 bonded thereto, is positioned against a shoulder 29 of the outer ring 12 as shown and a conically shaped tool is pressed axially against the lip 28 to flatten it into a loop configuration 30, as shown in phantom. During such deformation, the loop configuration 30 is moved radially outwardly into engagement with an annular groove 32 within the bore of the outer ring 12 to retain bearing shield 22.

Although such sealing structure adequately retains lubricant and excludes debris, the configuration requires expensive grinding operations, special tooling to provide the "roll crimp" flattening of the deformable lip 28, and, in some cases, an additional staking operation to prevent rotation of the bearing shield 22 with respect to the outer ring 12. Because a rolling element bearing of a particular size may be required with an inner ring 10 having a variety of axial lengths, a wide variety of inner rings must be manufactured, inventoried and processed to produce the bearing assemblies.

US-A-5 080 502 (corresponding to DE-U-90 05 328) discloses a sealed radial roller bearing which constitutes a rolling element bearing in accordance with the preamble of claim 1 with inner and outer rings with resilient seal means extending between the inner ring and flanged wheels on the inner ring which constitutes a rolling element bearing in accordance with the preamble of claim 1.

DE-C-3 612 052 discloses a rolling element bearing with inner and outer rings with interposed rollers. An inner ring spacer is provided which axially extends the inner ring.

According to the present invention there is provided a rolling element bearing comprising an outer ring; an inner ring; rolling elements within an annulus between the outer ring and the inner ring and an inner ring insert mounted on the outer periphery of the inner ring such that the inner ring insert extends a predetermined axial length beyond the inner ring and the inner ring insert is able to form a sliding surface for a sealing element, characterised in that an insert support means is provided against the axial face of the inner ring and radially inside the inner ring insert for supporting the inner ring insert such that the inner ring insert together with the insert support means provides a predetermined axial extension of the inner ring.

For a better understanding of the invention and to show how the same may be carried into effect, reference will now be made, by way of example, to Figures 2 to 5 of the accompanying drawings, in which:-
Fig. 2 is a cross-sectional view of a a portion of a bearing assembly illustrating an embodiment of a sealing structure and an inner ring insert as employed with a standardised bearing inner ring;
Fig. 3 is a cross-sectional view of a portion of a bearing assembly illustrating one embodiment of the present invention.
Fig. 4 is a cross-sectional view of a portion of a bearing assembly illustrating another embodiment of the present invention as employed with a standardised bearing inner ring; and
Fig. 5 is a cross-sectional view of a portion of a bearing assembly illustrating two inner rings joined together.

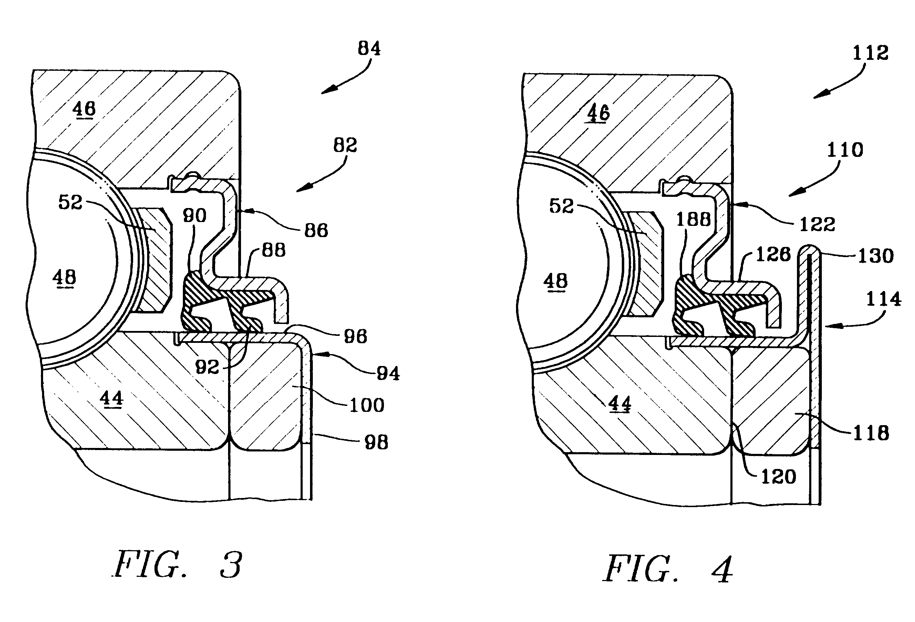

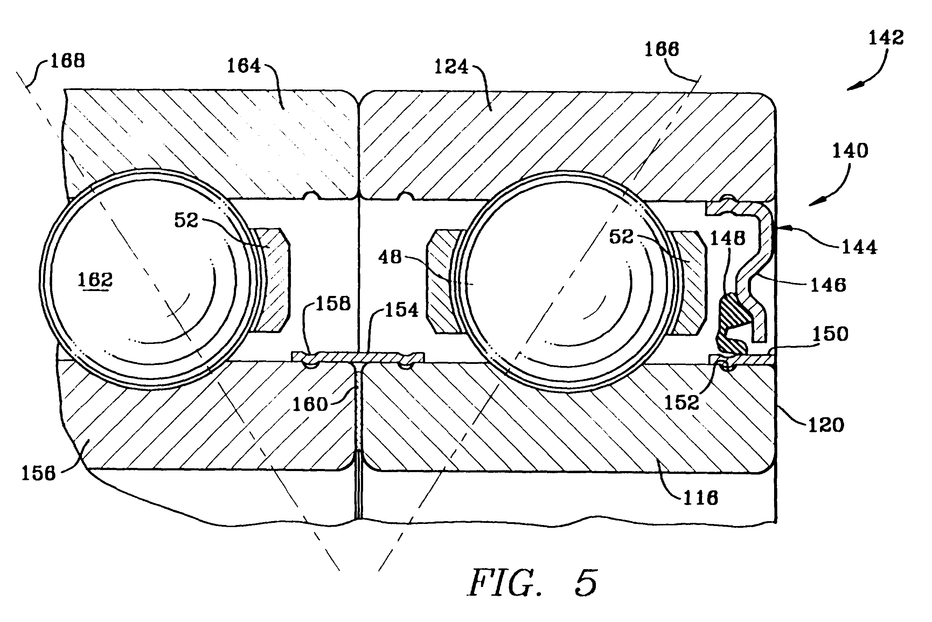

It has to be noted that the embodiments of a rolling element bearing illustrated in figures 2 and 5 do not fall within the scope of the invention, they do however illustrate features which may be used in the embodiments depicted in figures 3 and 4.

In this specification, identical elements in different embodiments are given identical reference characters.

Referring to Figures 2 to 5 of the drawings, Figure 2 illustrates a sealing structure 40 within a bearing assembly 42. The bearing assembly 42 includes an inner ring 44, outer ring 46 and rolling elements (balls) 48 within an annulus 50 therebetween. The rolling elements 48 are separated and held by a retainer (or cage) 52.

A bearing shield (or cap) 54 is mounted within a bore of the outer ring 46 and extends radially inward toward the inner ring 44. A resilient seal member 56, formed of synthetic rubber or similar material, is mounted on the bearing shield 54 by bonding or other means and extends radially inward therefrom to close the annulus 50. The bearing shield 54 is formed of steel or other metal by stamping or drawing operations and may include annular corrugation 58 for stiffness, resistance to inversion and better bonding to and support of the resilient seal member 56.

The bearing shield 54 may be mounted within the bore of the outer ring 46 by various methods. In the embodiment of Figure 2, the bearing shield 54 is pressed into place as shown and is retained by a "snap fit". Specifically, the bore of the outer ring 46 has a cylindrical recessed portion 60 with an annular groove 62. The bearing shield 54 has a cylindrical portion mating with recessed portion 60 and having a bulge 64 resiliently biassed into the annular groove 62 to lock the bearing shield 54 in place. The bulge 64 provides an interference fit with the recessed portion 60 during assembly and may be an annular ridge or discrete protrusions, e.g. three protrusions at 120 degree intervals.

The bearing shield 54 extends axially inward from the bulge 64 as an inward lip 66 and axially outward in a cylindrical configuration to add rigidity and resist cocking of the bearing shield 54 by engaging the recessed portion 60. Significantly, the bulge 64 has a curve or diameter extending beyond the annular groove 62 so that sharp edges within the recessed portion 60 adjacent the bulge 64 are forced against or into the surface of the bearing shield 54 to prevent rotation relative to the outer ring 46. The engagement of the sharp edges also enhances resistance to cocking of the bearing shield 54.

Alternatively, the bearing shield 54 may be press-fit within the recessed portion 60 without a mechanical interlock of the bulge 64 and annular groove 62. In the variation, the inward lip 66 and the adjacent cylindrical portion of the bearing shield 54 may form an interference fit with the recessed portion 60, neither the bulge 64 nor annular groove 62 being provided. In the embodiment shown, the bearing shield 54 extends radially inward from the axially outward end of its cylindrical portion to form a face portion 68 in alignment with the end surface of the outer ring 46.

The inner ring 44 has a recessed portion 70 within the outer surface thereof similar to the recessed portion 60. An inner ring insert 72 includes a cylindrical portion 74 press-fit over the recessed portion 70 with an interference fit. A land surface on the cylindrical portion 74 provides a smooth seal seat for the resilient seal member 58. The inner ring insert 72 is mounted on the inner ring 44 before mounting of the bearing shield 54. The seal member 58 includes a lip (or finger) 76 which is deflected upward from the indicated position as it is inserted with the bearing shield 54 over the inner ring insert 72 during assembly.

In the embodiment of Figure 2, a radially orientated end face 78 of the inner ring 44 is recessed slightly with respect to the face portion 68 of the bearing shield 54 and the end surface of the outer ring 46. The inner ring insert 72 is stamped or drawn of metal and has an L-shaped cross-section extending radially inwardly from the cylindrical portion 74 along the end face 78 as a radial face portion 80. The recessing of the end face 78 and the thickness of the radial face portion 80 of the inner ring insert 72 are selected such that end faces of the outer ring 46, bearing shield 54 and inner ring insert 72 are aligned within a common radially orientated plane.

Figure 3 illustrates an embodiment of the invention with a sealing structure 82 within bearing assembly 84. The bearing shield 86 is similar to the bearing shield 54 but includes an annular corrugation 88 which extends axially outward beyond the axial end of the outer ring 46. This outward extension of the corrugation 88 facilitates the resilient seal member 90 being larger than the resilient seal member 56 such that a second lip (or finger) 92 is provided axially outward from a first lip (or finger), which is similar to the lip 76 in Figure 2.

The inner ring insert 94 is of L-shaped cross-section similar to inner ring insert 72. However, a cylindrical portion 96 of the inner ring insert 94 extends axially outward to provide a seal seat for the second lip 92 and to provide a radial face portion 98 at a desired location spaced axially from the inner ring 44. An inner ring spacer 100 provides support for the inner ring insert 94 and is securely held against the inner ring 44 by the inner ring insert 94 to form a rigid inner ring assembly.

Significantly, the same inner ring 44 is employed in the variations of both Figures 2 and 3. By making the inner ring spacer 100 and inner ring insert 94 of various preselected lengths, a wide range of inner ring assemblies with desired axial lengths may be provided. This construction can replace the inner rings 10 of various lengths required with the prior sealing structure of Figure 1. Because the inner rings 10 and 44 require more complex machining and grinding operations than either inner ring spacer 100 or inner ring insert 94, substantial manufacturing cost savings can be realised from this design.

Figure 4 illustrates another embodiment of the invention with a sealing structure 110 within a bearing assembly 112. The bearing assembly 112 is similar to bearing assembly 42 of Figure 2. An inner ring insert 114 is mounted in a recess of inner ring 44, an inner ring spacer 118 is mounted directly against an axially outward face 120 of inner ring 44, and a bearing shield 122 is mounted in a recess of outer ring 46. Dimensions of the various elements are determined to provide the desired axial length of the inner ring assembly and to provide proper sealing.

In the embodiment of Figure 4, the bearing shield 122 is extended axially outward by an annular corrugation 126 to support resilient seal member 188 similar to seal member 90 of Figure 3 with two lips (or fingers). The inner ring insert 114 is axially outward of inner ring 44 and extends radially outward from inner ring 44 to form an annular surface 130 that serves as a "slinger" or "flinger" to throw dirt away from the bearing assembly 112. In the embodiment shown, the inner ring insert 114 is folded back on itself at annular surface 130 to form a T-shaped cross-section.

An illustrative embodiment is shown in Figure 5, wherein a sealing structure 140 is provided within bearing assembly 142. The sealing structure 140 is similar to sealing structure 110 but has bearing shield 144 with annular corrugation 146 adapted to support resilient seal member 148 with a single seal lip (or finger). An inner ring insert 150 is cylindrical in configuration and includes at least one protrusion engaging an annular groove 152 in the outer surface of inner ring 116 to provide a mechanical interlock.

A second inner ring insert 154 is similar to inner ring insert 150 but extends a longer axial distance to facilitate joining of two inner rings to form a bearing assembly with multiple rows of rolling elements, as shown. Specifically, the second inner ring 156, identical to inner ring 116, is joined to inner ring 116 by the second inner ring insert 154. Mounting of this insert upon second inner ring 156 is by mechanical interlock with groove 158 and upon inner ring 116 by press-fit or sliding fit.

The standardised inner rings 116 and 156 may be separated by a preload shim 160 to provide preloading of two rows of rolling elements, indicated as rolling element 48 and second rolling element (ball) 162. A second outer ring 164 is identical to the outer ring 124, both having the same axial length as the inner rings 116 and 156. Due to the spacing provided by the preload shim 160, a preload force indicated by lines 166 and 168 is created when the outer rings 124 and 164 are clamped together in the axial direction. The second inner ring insert 154 holds bearing assembly 142 together prior to installation.

From the above description, it will be apparent that the present sealing structure requires less material removal from the outer ring than the prior configuration of Figure 1. The sealing structure results in improved seal seat concentricity and lower cost, due to the suitability for through feed grinding and the reduced area requiring grinding. Assembly of the bearing shield and inner ring insert can be a "snap-in" procedure with simplified tooling pressing a bulge (or protrusion) of the bearing shield or inner ring snapping into a machined groove in the outer or inner ring, respectively.

The bearing shield and inner ring inserts can be stamped or drawn from steel or other sheet metal. Due to the reduced material removal, the outer ring can be made more rigid. The bearing shield can be made with less inner ring clearance because of the improved concentricity of the mounting on the outer ring. Also, the bearing shield and inner ring insert may be mounted in a recess in the outer ring bore and inner ring outer surface, respectively, formed during the plunge grinding operation which forms the corresponding outer and inner raceways.

Significantly, the present structure provides versatility that reduces inventory requirements. The inner ring insert spacer combines with the inner ring insert and inner ring to form a modular inner ring assembly that replaces inner rings of various lengths. Because the inner ring insert and insert spacer can be manufactured with less costly machining and grinding operations than inner rings with assorted axial lengths, the modular construction results in substantial cost savings without a reduction in bearing assembly performance.

## Claims

1. A rolling element bearing comprising an outer ring (46); an inner ring (44); rolling elements (48) within an annulus between the outer ring and the inner ring and an inner ring insert (72) mounted on the outer periphery of the inner ring such that the inner ring insert extends a predetermined axial length beyond the inner ring and the inner ring insert is able to form a sliding surface for a sealing element, characterised in that an insert support means (100) is provided against the axial face of the inner ring and radially inside the inner ring insert for supporting the inner ring insert such that the inner ring insert together with the insert support means provides a predetermined axial extension of the inner ring.

2. A rolling element bearing according to claim 1 with a sealing structure comprising a bearing shield (58) mountable on the outer ring (46) such that the bearing shield extends radially inwardly toward the inner ring (44) and resilient seal means (56) fixed to the bearing shield for sealing the annulus, the inner ring insert (72) being engaged by the resilient seal means as a seal seat.

3. A rolling element bearing according to claim 2, wherein the outer ring (46) includes a bore having an annular groove (62) and the bearing shield (58) includes at least one protrusion extending radially outward to provide a mechanical interlock by engaging the annular groove in the bore of the outer ring.

4. A rolling element bearing according to claim 2 or 3, wherein the inner ring insert is L-shaped in cross-section and comprises a cylindrical portion (70) providing the seal seat and a radially orientated portion (80) providing an end face (78).

5. A rolling element bearing according to claim 2, 3 or 4, wherein the resilient seal means (90) includes a plurality of lips (92) engageable with the inner ring insert to provide multiple seal barriers.

6. A rolling element bearing according to any one of the preceding claims, wherein said insert support means comprises an inner ring spacer (100, 118) between a or the radially orientated portion of the inner ring insert (94) and the inner ring, such that the inner ring spacer provides support for the inner ring insert and spaces the radially orientated end portion of the inner ring insert a predetermined axial distance from the inner ring.

7. A rolling element bearing according to any one of the preceding claims, wherein the inner ring insert is mountable upon a cylindrical outside surface of the inner ring with an interference or friction fit.

8. A rolling element bearing according to any one of the preceding claims, wherein the inner ring insert includes at least one protrusion extending radially inward to provide a mechanical interlock by engaging an annular groove (152) in the outside surface of the inner ring.

9. A rolling element bearing according to any one of the preceding claims except claim 4, wherein the inner ring insert extends axially outward and radially outward with respect to the inner ring to provide an annular surface serving as a slinger (130).

## Patentansprüche

1. Wälzlager mit einem äußeren Ring (46), einem inneren Ring (44), Wälzkörpern (48) innerhalb eines Ringraums zwischen dem äußeren Ring und dem inneren Ring und einem inneren Ringeinsatz (72), der an dem äußeren Umfang des inneren Rings derart montiert ist, daß der innere Ringeinsatz sich über eine vorbestimmte axiale Länge über den inneren Ring hinaus erstreckt, wobei der innere Ringeinsatz in der Lage ist, eine Gleitfläche für ein Dichtelement zu bilden, **dadurch gekennzeichnet,** daß ein Einsatzstützglied (100) gegenüber der axialen Fläche des inneren Rings und radial innerhalb des inneren Ringeinsatzes vorgesehen ist, um den inneren Ringeinsatz derart abzustützen, daß der innere Ringeinsatz zusammen mit dem Einsatzstützglied eine vorbestimmte axiale Verlängerung des inneren Rings bildet.

2. Wälzlager nach Anspruch 1, mit einer Dichtungsvorrichtung, die ein Lagerschild (58) aufweist, das an dem äußeren Ring (46) derart anbringbar ist, daß das Lagerschild sich radial nach innen auf den inneren Ring (44) zu erstreckt, und mit einem nachgiebigen Dichtungsglied (56), das an dem Lagerschild befestigt ist, um den Ringraum abzudichten, wobei der innere Ringeinsatz (72) durch das nachgiebige Dichtungsglied als Dichtungssitz berührt wird.

3. Wälzlager nach Anspruch 2, bei dem der äußere Ring (46) eine Bohrung aufweist, die eine ringförmige Nut (62) hat, und wobei das Lagerschild (58) wenigstens einen Vorsprung aufweist, der sich radial nach außen erstreckt, um eine mechanische Verriegelung durch Eingriff mit der ringförmigen Nut in der Bohrung des äußeren Rings zu bilden.

4. Wälzlager nach Anspruch 2 oder 3, bei dem der innere Ringeinsatz im Querschnitt L-förmig ist und einen zylindrischen Abschnitt (70) aufweist, der den Dichtungssitz bildet, sowie einen radial gerichteten Abschnitt (80), der eine Endfläche (78) bildet.

5. Wälzlager nach Anspruch 2, 3 oder 4, bei dem das nachgiebige Dichtungsglied (90) eine Vielzahl von Lippen (92) aufweist, die mit dem inneren Ringeinsatz in Eingriff bringbar sind, um mehrfache Dichtungsbarrieren zu bilden.

6. Wälzlager nach einem der vorhergehenden Ansprüche, bei dem das Einsatzstützglied ein inneres Ringabstandsglied (100, 118) zwischen einem oder dem radial gerichteten Abschnitt des inneren Ringeinsatzes (94) und dem inneren Ring aufweist, so daß das innere Ringabstandsglied eine Abstützung für den inneren Ringeinsatz bildet und den radial gerichteten Endabschnitt des inneren Ringeinsatzes um eine vorbestimmte axiaie Entfernung gegenüber dem inneren Ring auf Abstand hält.

7. Wälzlager nach einem der vorhergehenden Ansprüche, bei dem der innere Ringeinsatz auf einer zylindrischen äußeren Oberfläche des inneren Rings mit einem Festsitz oder Reibungssitz montierbar ist.

8. Wälzlager nach einem der vorhergehenden Ansprüche, bei dem der innere Ringeinsatz wenigstens einen Vorsprung aufweist, der sich radial nach innen erstreckt, um eine mechanische Verriegelung durch Eingriff mit einer ringförmigen Nut (152) in der äußeren Oberfläche des inneren Rings zu bilden.

9. Wälzlager nach einem der vorhergehenden Ansprüche, mit Ausnahme von Anspruch 4, bei dem der innere Ringeinsatz sich axial nach außen und radial nach außen in bezug auf den inneren Ring erstreckt, um eine ringförmige Oberfläche zu bilden, die als Füllvorrichtung (Slinger 130) dient.

## Revendications

1. Palier à contact de roulement comportant une bague extérieure (46); une bague intérieure (44); des éléments de roulement (48) dans un espace annulaire entre la bague extérieure et la bague intérieure et un insert de bague intérieure (72) monté sur la périphérie extérieure de la bague intérieure de telle sorte que l'insert de bague intérieure s'étend sur une longueur axiale prédéterminée au-delà de la bague intérieure et l'insert de bague intérieure peut former une surface de glissement pour un élément d'étanchéité, caractérisé en ce que des moyens de support d'insert (100) sont prévus contre la face axiale de la bague intérieure et radialement à l'intérieur de l'insert de bague intérieure afin de supporter l'insert de bague intérieure de telle sorte que l'insert de bague intérieure avec les moyens de support d'insert procurent une extension axiale prédéterminée de la bague intérieure.

2. Palier à contact de roulement selon la revendication 1, avec une structure d'étanchéité comportant une protection de palier (58) pouvant être montée sur la bague extérieure (46) de telle sorte que la protection de palier s'étend radialement vers l'intérieur en direction de la bague intérieure (44) et des moyens d'étanchéité élastiques (56) fixés sur la protection de palier afin d'assurer l'étanchéité de l'espace annulaire, l'insert de bague intérieure (72) étant engagé par les moyens d'étanchéité élastiques en servant de siège de joint.

3. Palier à contact de roulement selon la revendication 2, dans lequel la bague extérieure (46) comprend un alésage ayant une gorge annulaire (62) et la protection de palier (58) comprend au moins une saillie s'étendant radialement vers l'extérieur afin de procurer un blocage mécanique par engagement de la gorge annulaire dans l'alésage de la bague extérieure.

4. Palier à contact de roulement selon la revendication 2 ou 3, dans lequel l'insert de bague intérieure est de section en forme de L et comprend une partie cylindrique (70) procurant le siège de joint et une partie orientée radialement (80) procurant une face d'extrémité (78).

5. Palier à contact de roulement selon la revendication 2 ou 3, dans lequel les moyens d'étanchéité élastiques (90) comprennent plusieurs lèvres (92) pouvant être engagées avec l'insert de bague intérieure afin de procurer plusieurs barrières d'étanchéité.

6. Palier à contact de roulement selon l'une quelconque des revendications précédentes, dans lequel lesdits moyens de support d'insert comportent une entretoise de bague intérieure (100, 118) entre une ou la partie orientée radialement de l'insert de bague intérieure (94) et la bague intérieure, de telle sorte que l'entretoise de bague intérieure procure un support pour l'insert de bague intérieure et espace la partie d'extrémité orientée radialement de l'insert de bague intérieure d'une distance axiale prédéterminée par rapport à la bague intérieure.

7. Palier à contact de roulement selon l'une quelconque des revendications précédentes, dans lequel l'insert de bague intérieure peut être monté sur une surface extérieure cylindrique de la bague intérieure avec un ajustement à interférence ou à friction.

8. Palier à contact de roulement selon l'une quelconque des revendications précédentes, dans lequel l'insert de bague intérieure comprend au moins une saillie s'étendant radialement vers l'intérieur afin de procurer un blocage mécanique par engagement d'une gorge annulaire (152) dans la surface extérieure de la bague intérieure.

9. Palier à contact de roulement selon l'une quelconque des revendications précédentes à l'exception de la revendication 4, dans lequel l'insert de bague intérieure s'étend axialement vers l'extérieur et radialement vers l'extérieur par rapport à la bague intérieure afin de procurer une surface annulaire servant de bague d'étanchéité (130).
